# EUROPEAN PATENT APPLICATION

(11) **EP 3 050 844 A1**
(43) Date of publication of application: **03.08.2016**
(21) Application number: 14849900.7
(22) Date of filing: 12.08.2014
(51) Int. Cl.: C01B 31/00, B82Y 30/00

(54) **EXFOLIATION OF GRAPHITE WITH DEEP EUTECTIC SOLVENTS**

(30) Priority: 24.09.2013 ES 201331382
(71) Applicant: Consejo Superior de Investigaciones Cientificas (CSIC), 28006 Madrid (ES)
(72) Inventor: DE MIGUEL TURULLOIS, Irene, 28006 Madrid (ES); HERRADÓN GARCÍA, Bernardo, 28006 Madrid (ES); MANN MORALES, Enrique Alejandro, 28006 Madrid (ES); MORALES BERGAS, Enrique, 28006 Madrid (ES)
(74) Representative: Cueto, Sénida
(86) International application number: PCT/ES2014/070652
(87) International publication number: WO 2015/044478

(57) **Abstract**

The invention relate to graphite materials, and more specifically to the exfoliation of graphite using deep eutectic solvents, to methods related thereto, to polymeric composite materials containing graphene and the methods for the production thereof, and to graphene/metal, exfoliated graphite/metal, graphene/metal oxide and exfoliated graphite/metal oxide composite materials and the methods for the production thereof.

## Description

### Field of the Invention

The present invention relates to graphitic materials, and more specifically to exfoliation of graphite using deep eutectic solvents, methods related to it, polymeric composites with exfoliated graphite/graphene, composites graphene/metal, exfoliated graphite/metal, graphene/metal oxide and exfoliated graphite/metal oxide, and methods for their preparation.

### Background of the Invention

Graphene is a substance composed of pure sp² hybridized carbon, having a structure with a hexagonal lamellar regular pattern similar to the pattern of graphite structure, but only one atom thick. This material has exceptional mechanical and electrical properties that are having a profound impact on many research areas and can be very useful in various applications. For example, graphene has hardness, elasticity and flexibility values several orders of magnitude greater than those observed in common polymeric materials. Furthermore, it has been determined that this material exhibits very high both thermal and electrical conductivity values, similar or better to those displayed by many metals.

Graphene is generally obtained from graphite by mechanical and/or chemical treatments. For example, this material can be produced mechanically using a method comprising applying adhesive tape over graphite and subsequently withdrawing it to obtain graphene sheets adhered thereto (Science, 2004, 306, 666). However, this method has some drawbacks as its irreproducibility. Another method is the one called Chemical Vapor Deposition (CVD for its acronym in English Chemical Vapor Deposition) and can generate high-quality graphene in acceptable amounts. However, this method has disadvantages associated with the complexity of the deposition process, the need for high temperatures and vacuum, and the difficulties in transferring the obtained graphene sheets to other substrates.

Other known methods are the micromechanical exfoliation, epitaxial growth on insulating surfaces or chemical processing of graphite oxide, involving oxidation and exfoliation of graphite and subsequent reduction. All these methods have drawbacks related to reproducibility, drastic conditions of reduction to practice, or the low quality of obtained graphene.

Graphene can also be produced starting from graphite by methods of chemical exfoliation. Most of these methods involve the oxidation of graphite to graphite oxide. Graphite oxide once exfoliated and dispersed, consists of chemically modified graphene sheets on the surface, and edges, with different functional groups, such as carboxylic acids, hydroxyl groups and epoxides. Unfortunately, currently available methods of chemical exfoliation, by oxidation of graphite, require aggressive treatments with toxic reagents and require special care regarding their handling (for example, mixtures of sulfuric acid and sodium nitrate in the presence of potassium permanganate) to produce residues and unwanted side products. In addition, chemical functionalization involves a considerable deterioration of the atomic structure of graphene sheet. Although most of the functional groups may be removed by reduction processes, structural defects remain in the sheet, which interfere with many of the properties of graphene, such as its electrical conductivity or mechanical performance.

There is therefore a need to develop new methods allowing the obtaining of graphene without significant structural defects in macroscopic amounts and without the disadvantages discussed above. A very interesting approach for achieving this goal is the use of techniques of graphite exfoliation in solution (Acc. Chem. Res. 2012, 46, 14). The success of this approach is based on the correct choice of solvent to be used: for the exfoliation of graphite to occur in solution it is necessary to overcome the attractions of Van der Waals type between different adjacent layers of graphite. It has been described that solvents having a surface tension similar to the one observed in graphite (about 40 mJ/m²), such as N-methylpyrrolidone (NMP) or dimethylformamide (DMF), facilitate that task. On the other hand, to overcome these attractive forces of Van der Waals type, some external power must be provided to the system, for example sonication techniques, thermal energy or stirring.

Ionic liquids (ILs) are completely dissociated salts, which have a melting temperature below or near room temperature, but by convention, those that have a liquid nature below 100°C are included in this definition. They consist of a cation, usually organic in nature, and an anion of organic or inorganic nature. There have been described methods for the use of ILs in graphite exfoliation and intercalation and (EP2518103 A2, US2011/0319554 A1, WO2012117251 A1, J. Mater. Chem., 2011, 21, 3428, Chem. Commun., 2010, 46, 4487, Chem. Commun., 2012, 48, 1877). However, the use of ILs have some drawbacks associated with their toxicity, price, low biodegradability and the need to be prepared by synthetic sequences that involve the use of large amounts of solvents and reagents.

A very attractive possibility is the use of a new generation of solvents called Deep Eutectic Solvents (DESs). A DES is a type of ionic solvent with particular properties and consisting of a mixture of compounds which form a eutectic with a melting point much lower than the one of any of the individual components (Chem. Soc. Rev., 2012, 41, 7108) Fusion. DESs have proved to be very useful as solvents or electrolytes, for example in electrodeposition processes or electropolishing processes, and as catalysts. DESs are also used in separation processes. Although DESs have many common features with ILs, they are considered a different type of solvents. On one hand, ionic liquids consist of a single compound, while DESs are a mixture of two substances. On the other hand, ILs are fully composed by ions, whereas DESs have both ions and neutral molecules. Furthermore ionic liquids are synthesized by chemical reactions whereas DESs are prepared by mixing and heating the components in the right proportions. The first generation of DESs is based on mixtures of quaternary ammonium salts with compounds able to establish hydrogen bonds, such as, for example, amines and carboxylic acids. The phenomenon of obtaining DESs was first described in 2003 for mixtures of choline chloride (2-hydroxyethyl)trimethylammonium chloride and urea. Choline chloride has a melting point of 302 °C and urea has a melting point of 133 °C. The eutectic mixture of these two compounds in a 1:2 molar ratio generates an eutectic mixture having a melting point of only 12 °C. Compared with ionic liquids, with which they share some characteristics, the DESs are much cheaper regarding their preparation, much less toxic, and in some occasions they are biodegradable.
Recently the preparation of graphene from graphite oxide through a ionothermal reduction in the presence of DESs based on a mixture of choline chloride and urea, was described (RSC Advances, 2013, 3, 1 1807). However, this method has the disadvantage that the starting graphite must undergo a previous chemical treatment in order to obtain graphite oxide, which is subsequently subjected to the reduction process.
Among the main advantages of the DESs their low cost, simplicity of preparation (just mixing the components and stirring for a short period of time) or the low toxicity and high biodegradability of the components. can be highlighted.
The present invention discloses a method consisting in the exfoliation of graphite in the presence of a DES. In particular, the mixture of choline chloride and ethylene glycol in 1:2 molar ratio results in a DES with very attractive characteristics for being used as liquid phase for the graphite exfoliation process: low melting point (-66 °C), low viscosity (36 cP) and especially a surface tension 48 mJ m⁻², a value similar to the one described for other solvents used in the exfoliation of graphite in liquid phase.

Among the advantages of the method described herein, the simplicity of the process has to be highlighted, since it is only necessary, according to particular embodiments, stirring a mixture of graphite with the DES during an appropriate time period, that can range from several hours, or until one week, for example, it can be 60 hours to obtain a homogeneous dispersion of graphene or exfoliated graphite in the DES. Subsequently, graphene or exfoliated graphite can be isolated by filtration, sedimentation and/or centrifugation techniques and the DES can be recycled for subsequent use again. Furthermore, the quality of the graphene and exfoliated graphite obtained is high because no chemical transformation occurs at any stage of the process (contrary to what happens in the processes based on oxidation and subsequent reduction of graphite).

Another advantage of this method is its potential compatibility with the preparation of polymer composites which include graphene in their structure, based on the ability of DESs to disperse large amount of polymers in an homogeneous way, something essential for obtaining high quality composite materials. The presence of graphene in these compounds improves their performance and properties. In the present invention a method is described for preparing polymer composite materials containing graphene/exfoliated graphite, for example, polymer composite materials of polyaniline (a conductive polymer) and graphene obtained by exfoliation into DESs, that allows to substantially improve the conducting properties of said polymer.

On the other hand, composite materials of the type of graphene/metal, graphene/metal oxide have originated great interest due to their potential applications in many fields such as electronics, optics or catalysis, but certainly the most important application is in the field of energy storage. Besides the performance of these composite materials is on many occasions better than the performance of the materials in an individual manner. The combination of nanomaterials with graphene allows in many cases to improve the mechanical, optical, electronic and/or electrochemical properties thereof. The principal methods used to synthesize these materials to date, involve either preparing a mechanical mixture in a mortar or the like, wherein the formation of the composite is produced by pressure of the metal oxide against graphite oxide, or by adding a precursor metal salt (such as a metal halide or a metal nitrate) in a solution, subsequently precipitating the oxide upon addition of a base in the presence of graphite oxide. Both methods have the disadvantage of possible restacking of graphene sheets to form graphite, in the case of mechanical mixing the restacking is driven by the pressure exerted by the mortar and in the case of the formation of metal oxide from the corresponding salt metal, the restacking occurs naturally in the absence of a means to prevent it. In general, both methods use graphite oxide as starting material, however, the graphite oxide is an insulating material contrary to the high theoretical conductivity of graphene. The surface of graphite oxide has irregularities and defects due to the strong chemical and/or thermal treatments to which it is subjected, in addition of having epoxide, ether and ester groups, among others, which affect not only the graphene reactivity, theoretically low, but the specific surface area or the surface area thereof, as these branches are often concentrated on the edges of the sheets preventing the binding of other compounds with the graphene sheet. The less surface area have the sheet, the greater the influence of these peripheral functional groups.

The principal mode of obtaining graphene/metal oxide composites is by electrodeposition of the dissolved metal salt, or by transferring the exfoliated graphite to a solution containing the dissolved metal salt and its subsequent transformation into the metal oxide. In both cases it is not assured that there is no restacking of graphene sheets to form graphite, since there is nothing to prevent natural aggregation of the sheets, except for a weak interaction with the exfoliating liquid, that permits to overcome Van der Waals type attractions between different adjacent layers of graphite with the aid of techniques as sonication or stirring, without which the sheets tend to restack again.

To date, numerous advances have been achieved, addressing the preparation of hybrid materials of graphene/metal or graphene/metal oxide type. However, the bonding of metal nanoparticles on the surface of pristine graphene is a much more complex process mainly due to the high hydrophobicity of pristine graphene.

Most examples described in the literature for the preparation of composites of graphene/metal or graphene/metal oxide type use graphene oxide (GO) or reduced graphene oxide (RGO).

Only recently the preparation of composites has been described, consisting of pristine graphene sheets decorated with Ag, Au and Pd metal nanoparticles (Advanced Functional Materials, 2013, 23, 5771). In this paper the authors employ an *ex-situ* method, i.e., they pre-synthesize nanoparticles and subsequently mix them with sheets of graphene which have been prepared by exfoliation of expanded graphite in N-methylpyrrolidone (NMP). According to the method developed in the present invention the "decoration" of graphene sheets is advantageously performed *"in situ".*

US20140054490 describes the preparation of composites of graphene with metals or metal oxides, through the previous preparation of a composite metal salt-graphite oxide which is exposed to the action of electromagnetic radiation thus obtaining nanoparticles of metal or metal oxide on graphene by reducing the metal salt to metal or metal oxide, and of the graphite oxide to graphene.

US8257867 describes the synthesis of graphene/metal oxide composite comprising placing the graphene in a suspension and dispersing it by a surfactant or tensioactive agent, adding a metal oxide precursor forming a second suspension and precipitating the metal oxide of the second suspension onto at least one surface of dispersed graphene. According to this document composites are obtained with a specific capacity at least twice the specific capacity of the oxide starting material.

US20140178759 describes metal oxide monoliths supported on graphene arranged in three dimensional structures of graphene sheets stacked with covalent bonds between them, and said metal oxide being located between the sheets. These structures are obtained from an aerogel monolith of graphene immersed in a solution comprising at least one metal salt, curing this mixture and heating.

Other recent documents describing an exfoliation process of three-dimensional materials are for example WO2014001519 which describes a procedure to exfoliate dimensional structures in water and applying ultrasounds.

### Description of the Invention

In the context of the present invention, the term "graphene" refers to carbon atoms with sp² hybridization arranged in a regular hexagonal pattern. In the context of the present invention, the term "graphene" includes 10 or fewer carbon sheets with sp² hybridization, including, for example, individual graphene sheets.

In the context of the present invention, the term "graphite" refers to any form of graphite, including any natural and synthetic form of graphite, for example, crystalline graphite, expanded graphite, graphite powder, pure graphite.

In the context of the present invention, the term "deep eutectic solvent" (DES) relates to an ionic solvent which forms a eutectic mixture with a melting point significantly lower than the melting point of its individual components. Such mixtures comprise a metal or ammonium salt and a hydrogen bond donor, which form an eutectic mixture when mixed in a certain ratio (whether or not said ratio is the eutectic point) and are relatively simple to prepare in pure form. The DESs do not react with water, many are biodegradable and toxicological properties of the components are known.

In any embodiment of the present invention said deep eutectic solvent comprises an ammonium salt and hydrogen bond donor. As ammonium salt, for example: an amino acid at a suitable pH such as alanine, glycine, proline, can be used.

The ammonium salt is, according to particular embodiments, an ammonium halide. In a preferred embodiment the ammonium halide is selected from quaternary ammonium halides. In a more preferred embodiment the ammonium halide is selected from ethylammonium chloride, tetrabutylammonium chloride, benzyltriethylammonium chloride, tetramethylammonium chloride, (2-hydroxyethyl)diethylammonium chloride, tetraethylammonium bromide, betaine, acetylcholine chloride, choline nitrate, choline tetrafluoroborate, chlorocholine chloride, choline fluoride and N-(2-hydroxyethyl!) trimethylammoniun (choline chloride) chloride. According to a particularly preferred embodiment, the quaternary ammonium chloride is N-(2-hydroxyethyl)trimethylammonium chloride (choline chloride).

The hydrogen bond donor is selected from an alcohol, including a diol or polyol, an amine, a diamine, an amide, a urea, a thiourea, an imidazole and a carboxylic acid.

Examples of alcohols are, ethylenglycol xylitol, resorcinol, D-isosorbide, sorbitol and glycerol. Examples of amides include acetamide and benzamide. Examples of ureas are urea, 1,1-dimethylurea, propylene urea, 1,3-dimethylurea, 1-methylurea. Examples of imidazoles are imidazole, or a hydrogenated imidazole, such as imidazoline Examples of carboxylic acids are oxalic acid, malonic acid, malic acid, tartaric acid, benzoic acid, itaconic acid, citric acid, 4-hydroxybenzoic acid, cinnamic acid, phenylacetic acid, levulinic acid, lactic acid, gallic acid, caffeic acid, succinic acid, hexanoic acid, coumaric acid, stearic acid, adipic acid, oleic acid, isuberic acid, linoleic acid or decanoic acid.

In particular embodiments the hydrogen bond donor is preferably selected from urea, acetamide, thiourea, 1-methylurea, glycerol, 2,2,2-trifluoroacetamide, imidazole, adipic acid, citric acid, malonic acid, oxalic acid, phenylacetic acid, phenylpropionic acid, succinic acid, levulinic acid, glycolic acid, benzoic acid, benzyl alcohol, phenol, p-methylphenol, o-methylphenol, m-methylphenol, p-chlorophenol, D-fructose, D-glucose, D-xylose, D-arabinose, L-arabinose, formamide, vanillin, ethylene glycol or aniline.

In a preferred embodiment the hydrogen bond donor is ethylene glycol.

The term "composite material" and "composite" have the same meaning in the context of the present invention and refer to structures of monolayer or multilayer graphene sheets (more than one layer of carbon atoms) on which particles of materials are deposited, preferably nanoparticles, or nanostructured materials. Said nanostructured material is a material constituted by fragments with size in the range between 1 and 200 nm.

The term "metal oxide" means an oxide of a pure metal or a mixed oxide, i.e. comprising more than one metal.

The term "metal salt" refers to a salt of a single metal or a mixed salt, i.e., comprising more than one metal.

The term "polymer composite material" or "polymer material" refers in the context of the present invention to material resulting from depositing a polymer on exfoliated graphite according to the method defined in claim 1.

The present invention relates firstly to a method for obtaining exfoliated graphite, comprising:
a) preparing a first mixture of graphite and a deep eutectic solvent and
b) substantially homogenizing the first mixture to obtain a homogenized mixture containing exfoliated graphite.

According to particular embodiments of the present invention the method further comprises:
- mixing said homogenized mixture containing exfoliated graphite with a second mixture, previously prepared, of a polymer and a deep eutectic solvent, which may be the same as the one used in the first mixture with graphite, obtaining a resultant mixture containing a polymer composite containing exfoliated graphite.

In the preparation of the second mixture, the polymer must be mixed with the DES, for example by sonication, for a time period sufficient to obtain a homogeneous mixture. Said polymer material containing exfoliated graphite can be extracted from the resulting mixture, and therefore isolated.

The resulting mixture can then be substantially dehomogenized, for example by centrifugation, to allow recovery and isolation of the polymer composite. A substantially homogenized mixture may be diluted, for example with ethanol or water, prior to the de-homogenization of the mixture. The polymer composite can be recovered and/or isolated from the dehomogenized mixture by known methods, such as by filtration and centrifugation.

According to additional particular embodiments of the present invention, the method comprises:
a) preparing a first mixture of graphite and a deep eutectic solvent
b) substantially homogenizing said first mixture, obtaining a homogenized mixture that contains exfoliated graphite, and
c) dehomogenizing the homogenized mixture, obtaining a dehomogenized mixture.

According to additional particular embodiments of the present invention, the method comprises:
a) preparing a first mixture of graphite and a deep eutectic solvent and
b) substantially homogenizing the first mixture obtaining a homogenized mixture that contains exfoliated graphite,
c) dehomogenizing the homogenized mixture, obtaining a dehomogenized mixture.
d) extracting exfoliated graphite from the dehomogenized mixture, obtaining isolated exfoliated graphite.

Optionally, one can mix the isolated exfoliated graphite with a DES obtaining an exfoliated graphite-DES mixture, and combine the exfoliated graphite-DES mixture with a polymer, obtaining a polymer material comprising exfoliated graphite. Said polymeric material comprising exfoliated graphite can be extracted, and therefore isolated from the mixture.

The polymer useful for the purposes of the present invention may be any polymer, such as a polymer obtained by polymerizing a monomer containing a vinyl group. Examples of such polymers include polystyrenes, optionally substituted, polyethylenes optionally substituted, polypropylenes or polyphenylenes.

Other examples of useful polymers to obtain for polymeric composites containing graphene, comprise starch, polyvinylpyrrolidone (PVP), poly(vinyl alcohol) (PVA), polyacrylamide (PAA), polymethacrylamides, polyamides (PA6), polyacetylene, sulfur polynitride, polyamide, nylon, polyvinylidene fluoride (PVDF), polyimide (PI), N-phenyl-p-phenylene diamine, polyacrylic acid, vinylene polyaryl, polythiophene (PT), poly(p-phenylene vinylene) (PPV), polyfuran, polystyrene (PS), polyaniline sulfate, poly (thiophene-3-acetic acid), polypyrrole (PPY), cellulose, hydroxypropylmethylcellulose, sodium carboxymethylcellulose, hydroxyethyl methylcellulose, hydroxymethylcellulose, polyethylene glycol (PEG), epoxy resins, hydroxypropyl cellulose, hemicellulose, lignin, methylcellulose, guar gum, arabic gum, xanthan, tragacanth, alginic acid, sodium alginate, ammonium alginate, polyphosphazenes, poly(3-hexyl thiophene), poly (3,4-ethylenedioxythiophene) (PEDOT), polyoxazolidine and poly(dimethylammonium dichloride), polymethylmethacrylate (PMMA), poly(ethylene oxide) (PEO), polyvinyl chloride (PVC), polyacrylonitrile (PAN), maleic anhydride grafted polyethylene (MA-g-PE), Nafion, polyethylene terephthalate (PET), thermoplastic polyurethane (TPU), linear low density polyethylene (LLDPE) or polyethylmethacrylate (PEM). In a particular embodiment, the polymer is polyaniline or cellulose.

The exfoliated graphite obtained according to any of the embodiments of the method of the present invention comprises graphite sheets of various thicknesses and sizes. Said exfoliated graphite is composed at least partially by sheets of a thickness like graphene sheets, such that at least part of said exfoliated graphite is graphene.

Homogenization of both the first mixture and the second mixture, can be carried out by power supply, for example, by stirring, for example in a stirring plate, for a time period sufficient to substantially homogenize the mixture. The time period may vary depending on various factors such as the mixture volume or the mixture concentration. This time period may be less than one hour to several hours, or days, for example 48 hours. Any mixture can also be homogenized by sonication. The substantial homogenization of the first mixture by supplying sufficient energy, produces the separation of graphite sheets, allowing the obtaining the exfoliated graphite, and preferably, the preparation of graphene.

In the method of the present invention neither electrical current is applied to the mixture, nor electric potential difference is applied between two graphitic electrodes. Graphite is not used as an electrode. Therefore, to provide power to a mixture does not imply applying an electric current to graphite, or applying an electric current through at least one electrode immersed in a deep eutectic graphite serving as the electrolyte solvent.

The de-homogenization of an homogenized mixture, according to the method of the invention allows the recovery and isolation of exfoliated graphite, and particularly and preferably, graphene. The de-homogenization can be performed by centrifugation.

A mixture substantially homogenized according to the method of the invention can be diluted with a suitable solvent, for example ethanol, prior to the de-homogenization of the mixture. In this case, the exfoliated graphite, particularly, graphene, can be recovered and/or isolated from the dehomogenized mixture by known methods, for example, by filtration and centrifugation. The solvent can be recycled (or partially recycled) and used again. This treatment of the substantially homogenized mixture is therefore analogous for both, the first mixture (graphite with DES) and for the mixture resulting from combining the first mixture with the second mixture, and that contains the polymeric material with exfoliated graphite, graphene.

### Mixtures of deep eutectic solvents (DESs) and graphite, and mixtures of deep eutectic solvents (DESs) with exfoliated graphite

The present invention has as a further object a homogenized mixture containing:
- exfoliated graphite in form of sheets of various thicknesses and sizes, wherein at least part of them are graphene
- and a deep eutectic solvent.

The present invention has as a further object exfoliated graphite obtained according to the method of the invention.

The present invention also has as a further object graphene obtained according to the method of the invention.

Another object of the invention is a mixture of graphite and a deep eutectic solvent, the mixture may comprise any weight percentage of graphite relative to the total weight of the mixture, preferably between about 0.01% and 20% by weight of graphite, relative to the total weight of the mixture, and may have a higher percentage of graphite.

Such mixtures can be used according to the methods described above to provide graphene. The graphite used as starting material may be, as indicated at the beginning of the "description of the invention" any form of graphite, including any natural and synthetic form of graphite, for example, crystalline graphite, expanded graphite, graphite powder, pure graphite. In a particular embodiment the graphite is synthetic graphite, for example, synthetic graphite available from Sigma-Aldrich (St. Louis, MO).

In these mixtures of graphite and deep eutectic solvent, said deep eutectic solvent may be any one, and in particular any of those mentioned hereinabove.

In general, the present invention can be compatible with a variety of deep eutectic solvents. However, it is apparent that deep eutectic solvents of different composition may affect both the maximum solubility and the particle size of exfoliated graphite.

In Table 1 some illustrative, but not limiting examples, of components and melting temperatures of some DESs are shown, that can be used for the purposes of the present invention: **Table 1**

| Ammonium salts | Hydrogen bond donor (HBD) | Melting temperature | Ammonium salt:HBD (molar ratio) |
|---|---|---|---|
| 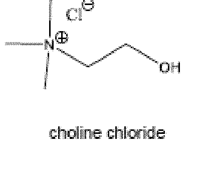 | 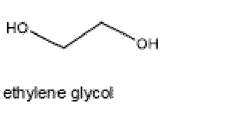 | -66°C | 1:2 |
| 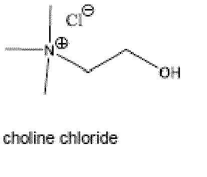 | 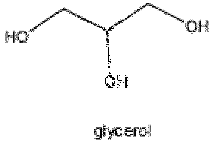 | -40°C | 1:2 |
| 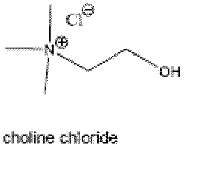 | 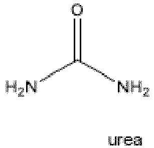 | 12°C | 1:2 |
| 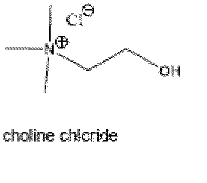 | 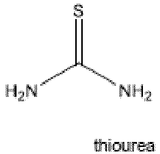 | 69°C | 1:2 |
| 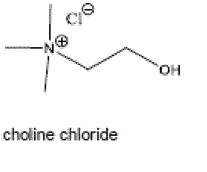 | 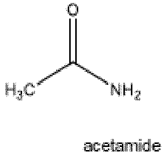 | 51°C | 1:2 |
| 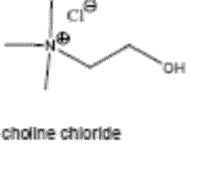 | 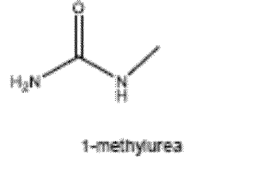 | 29°C | 1:2 |
| 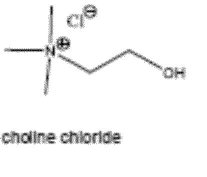 | 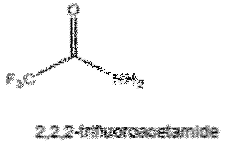 | 45°C | 1:2.5 |
| 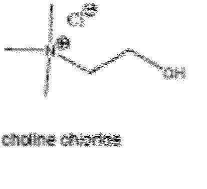 | 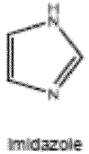 | 56°C | 3:7 |
| 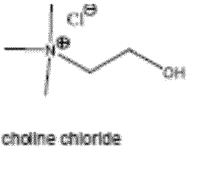 | 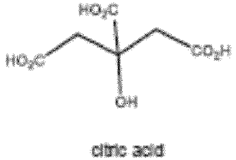 | 69°C | 1:1 |
| 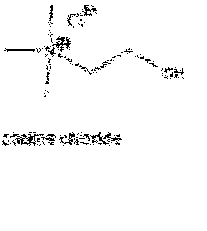 | 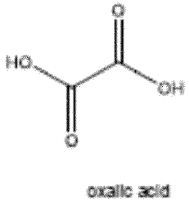 | 34°C | 1:1 |
| 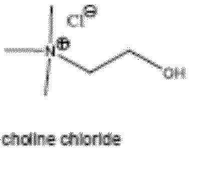 | 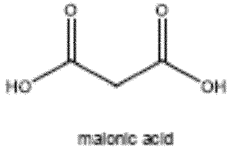 | 10°C | 1:1 |
| 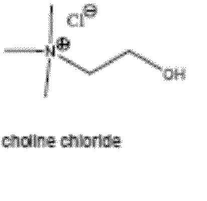 | 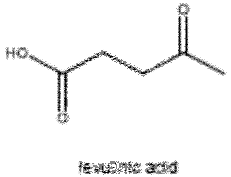 | 32°C | 1:2 |

### Polymeric composites containing graphene

In another aspect, the invention relates to polymeric composites containing graphene, or exfoliated graphite.

The present invention has as an additional object a polymeric composite comprising exfoliated graphite, characterized in that said polymeric composite has been prepared by the method defined above in any of its embodiments. According to preferred embodiments the exfoliated graphite is composed of sheets with such a thickness that they are graphene, therefore the present invention has as an additional object a polymeric composite that comprises graphene.

As essential advantage of the method of the present invention is that graphene is obtained substantially free from oxides (e.g. graphite oxide and/or graphene oxide) since the method described herein does not involve any oxidation step.

These polymeric composites can be used for an appropriate application, such as in electronic applications or thermoelectronic ones, among others. Thus preferred polymers are electric current conducting polymers. And, a further object of the present invention are polymeric composites containing exfoliated graphite, preferably graphene, prepared by any of the variants of the method described herein, and in which the polymer is a conductive polymer.

A further aspect of the present invention relates to a process for preparing composites of exfoliated graphite/metal, graphene/metal exfoliated graphite/metal oxide or graphene/metal oxide.

Said process for preparing a composite of exfoliated graphite/metal, graphene/metal exfoliated graphite/metal oxide or graphene/metal oxide is characterized in that it comprises:
- a) carrying out the method defined in claim 1 and
- b) contacting the product resulting from step a) defined in claim 1 with a compound selected from:
   - one or more metals,
   - one or more metal oxides,
   - and one or more metal salts.

According to a variant of this process step b) comprises contacting one or more metals with the product resulting from step a) obtaining a composite of graphene/metal or graphite/metal. The metal can be obtained by reduction of a precursor salt, preferably a salt of gold, silver, platinum, rhodium or palladium and combinations thereof. Optionally it comprises the addition of H₂O, accelerating the formation of composites.

According to a further variant of this process, step b) comprises contacting one or more metal oxides, one or more metal phosphates or mixtures thereof, with the product resulting from step a) obtaining a material of graphene/metal oxide or graphite/metal oxide.

According to a second further variant of this process, step b) comprises contacting a precursor of one or more metal oxides, preferably one or more metal salts, with the product resulting from step a), obtaining a material of graphene/metal oxide or graphite/metal oxide.

According to the method of the present invention, depending on the metal and its oxidation degree, the synthesis of the graphene/metal or graphene/metal oxide composites, can be carried out in various ways:
i) From metals, especially noble metals such as Au, Ag, Pt, Pd and Rh to obtain composites of graphene/metal type.
   The synthesis is carried out by reduction of an appropriate precursor salt, which may be any salt of gold, silver, platinum, rhodium or palladium and combinations thereof, such as acetates, nitrates, halides, sulfates, phosphates, carbonates, cyanates, thiocyanates, etc. Examples of salts are: AuCl₃ (gold (III) trichloride), AuCl (gold (I) chloride), HAuCl₄ (chloroauric acid), HAuCl₄.xH₂O (hydrated chloroauric acid), AgBrO₃ (silver bromate), Ag₂CO₃ (silver carbonate), Ag₂CrO₄ (silver chromate), AgNO₃ (silver nitrate), AgCl (silver chloride), Ag₃C₆H₅O₇·xH₂O (hydrated silver (I) cytrate), AgOCN (silver cyanate), AgCN (silver cyanide), AgF (silver fluoride), AgSbF₆ (silver hexafluoroantimoniate), AgAsF₆ (silver hexafluoroarsenate), AgPF₆ (silver hexafluorophosphate), AgHF₂ (silver hydrogen fluoride), Agl (silver iodide), CH₃CH(OH)COOAg (silver lactate), CH₃CO₂Ag (silver acetate), AgVO₃ (silver metavanadate), Ag₂MoO₄ (silver molybdate), AgNO₂ (silver nitrite), C₂F₅CO₂Ag (silver pentafluoropropionate), AgClO₄ (anhydrous silver perchlorate), AgClO₄·H₂O (hydrated silver perchlorate), AgReO₄ (silver perrhenate), AgBF₄ (silver tetrafluoroborate), AgSCN (silver thiocyanate), K₂PtCl₄ (potassium tetrachloroplatinate (II)), PtCl₂ [platinum (II) chloride], H₂PtCl₆ (chloroplatinic acid), Pt(NHₛ)₂Cl₄ (*cis*-, *trans*-diamino tetrachloroplatinum (IV), H₂PtBr₆·xH₂O (hydrated hexabromoplatinate (IV)), H₂Pt(OH)₆ (hydrogen hexahydroxyplatinate (IV)), PtBr₂ (platinum bromide), PtCl₄ (platinum tetrachloride), Pt(CN)₂ (platinum cyanide), Pt(NH₃)₂Cl₂ (*trans-*diaminoplatinum (II) dichloride), PtI₂ (platinum iodide), C₄K₂N₄PtS₄, (potassium tetrakis(thiocyanate)platinate (II)), PdCl₂ (palladium chloride), H₂PdCl₄ (dihydrogen tetrachloropalladate), Pd(H₂NCH₂CH₂NH₂)Cl₂ [(ethylenediamino)palladium (II) chloride], PdBr₂ (palladium (II) bromide), PdCl₂ (palladium (II) chloride), Pd(CN)₂ (palladium (II) cyanide), PdI₂ (palladium (II) iodide), Pd(NO₃)₂·2H₂O (dihydrated palladium (II) nitrate), K₂Pd(S₂O₃)₂·H₂O (monohydrated potassium palladium (II) thiosulfate), PdSO₄ (palladium (II) sulfate), Pd(NH₃)₄Br₂ (tetra(amino)palladium (II) bromide), Pd(NH₃)₄Cl₂·H₂O (tetra(amino)palladium (II) chloride monohydrate), Rh₂(OOCCH₃)₄ (dimeric rhodium (II) acetate), RhCl₃ (rhodium (III) chloride), RhCl₃xH₂O (hydrated rhodium (III) chloride), [(CF₃CF₂CF₂CO₂)₂Rh]₂ (dimeric rhodium (II) heptafluorobutyrate), Rh(H₂O)(OH)_{3-y}(NO₃)_{y} y=2-3 (hydrated rhodium (III) nitrate), Rh(NO₃)₃ (rhodium (III) nitrate), Rh₂(SO₄)₃ (rhodium (III) sulfate), etc.
   As a reducing agent one can be use sodium borohydride (NaBH₄) (mainly), lithium borohydride (LiBH₄), lithium aluminum tetrahydride (LiAlH₄) or other agents such as organic acids, such as citric acid, ascorbic acid, picolinic acid, formic acid, acrylic acid, methacrylic acid, acetic acid, salicylic acid, fumaric acid, L-malic acid, L-tartaric acid, salts of said organic acids, such as sodium citrate, vitamin B6 (pyridoxine), vitamin B2 (riboflavin and riboflavin hydrated salt 5'-monophosphate), natural amino acids such as L-arginine, L-asparagine, glycine, L-glutamic acid, L-histidine, L-methionine, L-tyrosine dipeptides such as L-carnosine, tripeptides, such as L-glutathion or reducing agents such as, ethylene glycol.
   According to the present invention, particular embodiments comprise the addition of the metal salt precursor to a suspension of exfoliated graphite/graphene in a DES, and then the addition of the reducing agent. Then the resulting mixture is stirred and the composite material obtained is isolated, for example, by filtration. Further particular embodiments comprise optionally adding H₂O to accelerate the formation of NPs. A particular example of the present invention is the preparation of graphene/Au, graphene/Pt composites.
ii) From metal oxides or metal phosphates: a variant of the method of the present invention to prepare composites of either exfoliated graphite/metal oxide or graphene/metal oxide comprising dissolving directly one or more commercial metallic oxides, such oxides as commercial metal oxides (such as for example Fe₃O₄, available at Aldrich), one or more metal phosphates, or a mixture thereof, in the eutectic solvent and adding the obtained solution to a suspension of graphene in the DES. Subsequently, oxide precipitation is promoted by adding an "antisolvent" (i.e., a solvent in which the oxide or phosphate is not soluble). H₂O or EtOH can be used as antisolvents. NPs formation of metal oxide on the surface of graphene/exfoliated graphite is observed. Optionally, one can also directly add the oxide or phosphate, in the solid forms without first dissolving it, on the suspension of graphene in the DES. This is the most direct method used.
   Any metal oxide can be used, such as oxides of the metals aluminum, tin, cobalt, iron, manganese, nickel, molybdenum, titanium, copper, cerium, ruthenium, zinc, chromium, vanadium, bismuth, silicon, indium, germanium, arsenic and combinations thereof. Specific examples are for example SnO₂ (tin oxide), Co₃O₄ (cobalt (II,III) oxide), Fe₂O₃ (iron oxide (III)), Mn₃O₄ (manganese (II,III) oxide), MnO (manganese oxide), Fe₃O₄(iron (II,III) oxide), NiO (nickel oxide), MoO₃ (molybdenum trioxide), TiO₂ (titanium dioxide), CuO (copper (II) oxide), Cu₂O (copper (I) oxide), CeO₂ (cerium (IV) oxide), RuO₂ (ruthenium (IV) oxide), MnO₂ (manganese (IV) oxide), ZnO (zinc oxide), MoO₂ (molibdenum (IV) oxide), V₂O₃ (vanadium (III) oxide), V₂O₅ (vanadium (V) oxide), Cr₂O₃ (chromium (III) oxide), CrO₃ (chromium (VI) oxide), Mn₂O₃ (manganese (III) oxide), MnO (manganese (II) oxide), SiO₂ (silica), In₂O₃ (indium (III) oxide), Bi₂O₃ (bismuth (III) oxide) and composed metal oxides such as, BiFeO₃ (bismuth ferric oxide), NiFe₂O₄ (nickel ferrite), Li₄Ti₅O₁₂ (lithium titanate spinel), LiFePO₄ (lithium iron phosphate), Li₃V₂(PO₄)₃ (lithium vanadium phosphate).
   This variant of the method of the present invention to prepare such graphene/metal oxide composite materials has the additional advantage that benefits from one of the most interesting features of DES, which is its ability to dissolve metal oxides.
   Specific examples advantageously prepared by this method are the graphene composites graphene/ Fe₃O₄, graphene/Co₃O₄ and graphene/NiO.
ii) According to a further variant of the present invention, one can prepare a graphene/metal oxide composite or a graphite/metal oxide composite from the hydrolysis of a suitable precursor of the type of a metal salt that can be any one, for example: salts referred to in section i) above, other metal salts such as aluminum salts, tin, cobalt, iron, manganese, nickel, molybdenum, titanium, copper, cerium, ruthenium, manganese, zinc, chromium, vanadium, gold, silver, platinum, rhodium, silicon, bismuth, indium, germanium, arsenic and combinations thereof. Concrete examples are SnCl₂, FeCl₃, FeCl₂, NiCl₂, TiCl₄, titanium tetraisopropoxide Ti(OC₃H₇)₄, CuCl, CuCl₂, CeCl₃, MnCl₂, CoCl₂, CrCl₃, RuCl₃, FeCl₂, CoCl₂, NiCl₂, AgCl, HAuCl₂, HAuCl₄, AgNO₃, H₂PtCl₆, H₂PdCl₄, RuCl₂, Co(NO₃)₂, AgC₂H₃O₂, CuSO₄, FeSO₄, ZnCl₂, (NH₄)₂Ce(NO₃)₆. The salts can be also salts of any kind, such as acetates, sulfates, nitrates, halides, phosphates, carbonates, cyanates, cyanides, thiocyanates, etc.

Graphene can be present in these materials in sheet form as a single layer of carbon atoms, or several stacked monolayers. The metal or metal oxide particles can be present either on one side or both sides of graphene sheet, or exfoliated graphite.

The composition of the obtained composite materials can be determined - without limitation - by conventional methods known to skilled in the art, such as spectroscopy, for example atomic absorption spectroscopy, gravimetry, microscopy or any other technique for quantitative chemical analysis.

The present invention has as a further object a composite formed by either exfoliated graphite/metal or graphene/metal or exfoliated graphite/metal oxide or graphene/metal oxide, obtained by the method described in one of claims 33 to 39.

According to particular embodiments, the metal is selected from gold, silver, platinum, palladium, rhodium, aluminum, tin, cobalt, iron, manganese, nickel, molybdenum, titanium, copper, cerium, ruthenium, manganese, zinc, chromium, vanadium, bismuth, silicon and mixtures thereof.

According to preferred embodiments, said composite material is selected from: a graphene/NiO composite, a graphene/Fe₃O₄ composite, a graphene/Au composite, a graphene/Ag composite, a graphene/Pt composite, a graphene/Co₃O₄ composite, and a graphene/TiO₂ composite.

The present invention has an additional object the use of exfoliated graphite defined in claim 21, or graphene obtained defined in claim 22, or polymeric composite material defined in claims 30 or 43, or the composite material defined in claims 41 or 42, for the manufacture of electronic devices, energy storage devices, power converters, manufacture of magnetic materials or manufacturing of mechanically strong materials.

### BRIEF DESCRIPTION OF THE FIGURES

**Figure 1** is a TEM image of a sample of exfoliated graphite in a DES obtained by variant A described in Example 1, where graphene sheets and exfoliated graphite are observed.
**Figure 2** is a TEM image of a sample of exfoliated graphite in a DES obtained by variant B described in Example 2, where graphene sheets and exfoliated graphite are observed.
**Figure 3** is a TEM image of a polymeric composite of polyaniline and exfoliated graphite, obtained by using a DES and following the procedure described in Example 3.
**Figure 4** shows a composition of graphite in a DES (choline chloride/ethylene glycol, in a 1: 2 ratio), a) before homogenizing b) after homogenization.
**Figure 5** shows an image of exfoliated graphite according to Example 4, taken with the transmission electron microscope.
**Figure 6** shows a Raman spectrum of exfoliated graphite according to Example 4.
**Figure 7** shows an image of graphite flakes, prepared according to Example 5, taken with the transmission electron microscope.
**Figure 8** shows an image of graphene/NiO composite prepared according to Example 6, taken with the transmission electron microscope.
**Figure 9** shows an image of a graphene/Fe₃O₄ composite prepared according to Example 7, taken with the transmission electron microscope.
**Figure 10** shows an image of a graphene/Au composite prepared according to Example 8, taken with the transmission electron microscope.
**Figure 11** shows an image of a graphene/Co₃O₄ composite prepared according to Example 9, taken with the transmission electron microscope.
**Figure 12** shows an image of a graphene/Ag composite prepared according to Example 10, taken with the transmission electron microscope.
**Figure 13** shows an image of a graphene/Pt composite prepared according to Example 11, taken with the transmission electron microscope.
**Figure 14** shows an image of a graphene/TiO₂ composite prepared according to Example 12, taken with the transmission electron microscope.
**Figure 15** shows an image of a graphene/cellulose composite prepared according to Example 13.
**Figure 16** shows a spectrum of X-ray diffraction (XRD) of a graphene/cellulose composite prepared according to Example 13.

### EXAMPLES:

### Example 1

### Exfoliation of synthetic graphite. Variant A

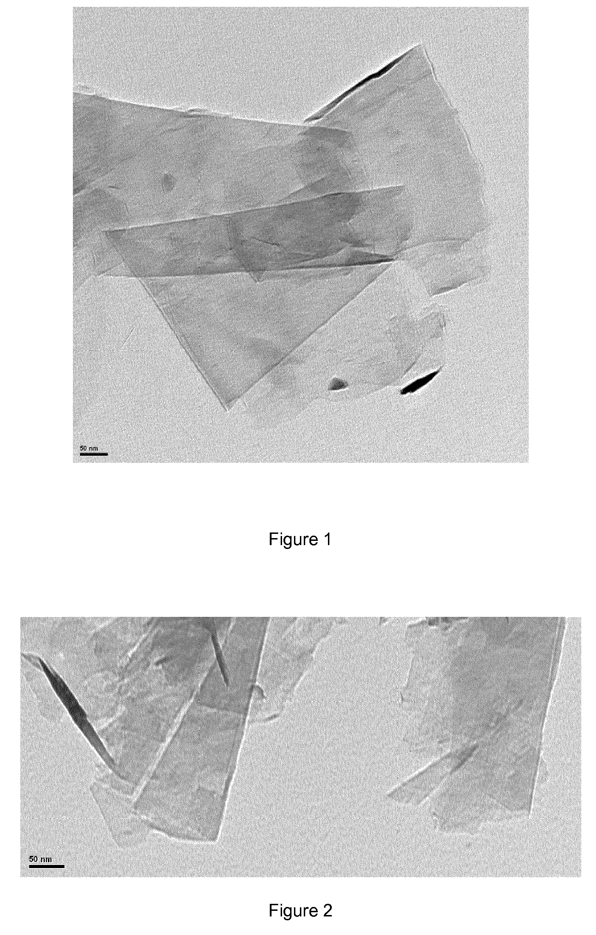

Graphite powder is added (synthetic, <20 microns, Sigma-Aldrich, 100 mg) to 9.900 g of a deep eutectic of solvent composed of a mixture of choline chloride and ethylene glycol in a molar ratio of 1:2. The mixture is sonicated for about three hours in an ultrasonic bath to give a homogeneous dark dispersion. 20 ml of absolute ethanol are added and the mixture is stirred for 20 minutes on a stir plate. The mixture is vacuum filtered through a nylon membrane (0.45 micron). The residue is washed with 20 ml of absolute ethanol and additional then dried in an oven at 60°C for 12 hours. The resulting solid was redispersed in 100 ml ethanol and sonicated for 15 minutes after which it is centrifuged to separate the non-exfoliated graphitic material from graphene. 80 ml of the supernatant was taken, from which samples are prepared for analysis. A few drops of this suspension are added on a copper grid coated with carbon and observed by transmission electron microscopy (TEM). As shown in Figure 1, we see the presence of both graphene monolayers as well as structures consisting of few stacked graphene sheets. It has to be kept in mind that during the process of sample preparation for analysis by TEM, a partial aggregation of graphene sheets occurs during solvent evaporation.

### Example 2

### Exfoliation of synthetic graphite. Variant B

Graphite powder is added (synthetic, <20 microns, Sigma-Aldrich, 1.0 g) about 9.0 g of a deep eutectic solvent composed of a mixture of choline chloride and ethylene glycol in a molar ratio 1: 2. The mixture is stirred on a stir plate (IKA. Rct Basic) for about 16 hours to obtain a homogeneous dark dispersion. 40 ml of absolute ethanol are added and the mixture is stirred for 20 additional minutes. Then the mixture is vacuum filtered through a nylon membrane (0.45 microns). The residue is washed with 50 ml of absolute ethanol and then dried in an oven at 60°C for 12 hours. The resulting solid was redispersed in 300 ml of DMF and sonicated for 15 minutes after which it is centrifuged to remove the non-exfoliated graphitic material from graphene. 250 ml of supernatant are taken and vacuum filtered through a nylon membrane (0.45 micron). The residue is washed with absolute ethanol (50 ml) and then dried in an oven at 60°C for 12 hours to give 102 mg of a dark gray powder. For the analysis of the sample, one milligram of said powder is taken and dispersed in 5 ml of absolute ethanol by sonication for 15 minutes. A few drops of said dispersion are taken and added on a copper grid coated with carbon and observed by transmission electron microscopy (TEM). As shown in Figure 2, the presence of both graphene monolayers as well as structures consisting of a few stacked graphene sheets are observed. It has to be kept in mind that during the process of sample preparation for analysis by TEM, a partial aggregation of graphene sheets occurs during solvent evaporation.

### Example 3

### Preparation of a composite polymeric material of polyaniline (PANI)/exfoliated graphite.

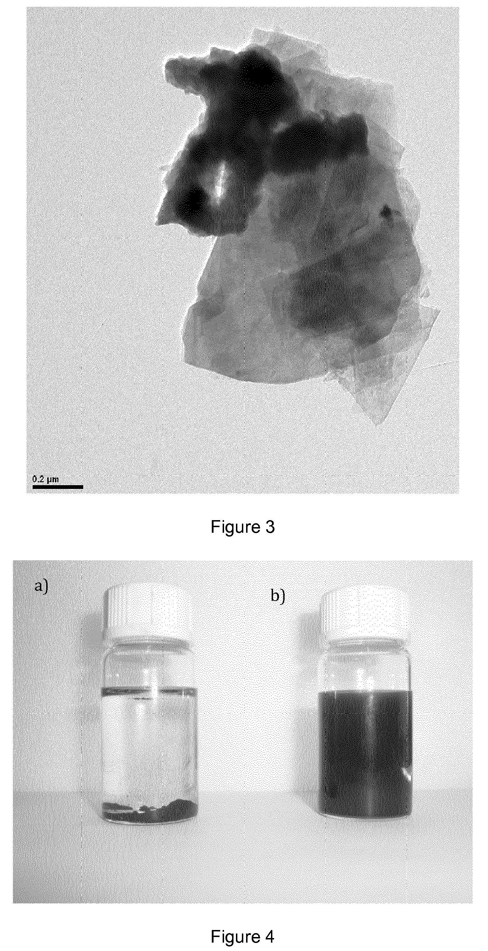

5 mg of exfoliated graphite obtained by the process described in example 2 are added to 5 ml of a deep eutectic solvent composed of a mixture of ethylene glycol and choline chloride in a molar ratio 1:2. The mixture was sonicated for 15 minutes in an ultrasonic bath (sonicator). On the other hand, 45 mg of polyaniline (PANI, structure of emeraldin chloride), previously synthesized by polymerization at 0°C of aniline in acid medium using ammonium persulfate as the oxidant with an oxidizing molar:monomer ratio of 4: 1, are added to about 20 ml of a deep eutectic solvent composed of a mixture of choline chloride and ethylene chloride in a 1:2 molar ratio, and the mixture is sonicated until the complete dissolution of the polymer (about one hour) is observed, obtaining a solution of green color. Both dispersions are combined and the resulting mixture sonicated for one hour and subsequently stirred for about 16 hours on a stir plate (IKA, RCT basic). 100 ml of absolute ethanol are slowly added and the resulting mixture was stirred for additional 20 minutes and then vacuum filtered through a nylon membrane (pore size: 0.45 micron). The residue is washed with 100 ml of additional absolute ethanol and dried in an oven at 60°C for 12 hours to give 49.2 mg of a black powder. For the analysis of the sample one milligram of said powder is taken and dispersed in 5 ml of absolute ethanol by 15 minutes sonication. A few drops of said dispersion are taken and added on a copper grid coated with carbon and observed by transmission electron microscopy (TEM). In Figure 3, an image of the TEM of the composite of PANI/exfoliated graphite is shown. The conductivity of the composite PANI/graphite obtained was measured by preparing a tablet with the material and measuring its conductivity by the method of the four points, obtaining a value of 650 S m⁻¹. This value is approximately four times the value obtained for a pill composed solely of PANI (160 S m⁻¹).

### Example 4

### Exfoliation of synthetic graphite. variant C

1.0 g of graphite powder is added (synthetic, <20 microns, Sigma-Aldrich, product number 282863) to 100 mL of a deep eutectic solvent composed of a mixture of ethylene glycol and choline chloride in a 1:2 molar ratio. The mixture is homogenized with a disperser (Ultra-Turrax T25, IKA) for one hour at 8000 rpm to give a homogeneous dark dispersion. The resulting dispersion is centrifuged for 90 minutes at 1700 rpm (420g, g, Unicen 21 centrifuge). 80 mL of supernatant were taken and added to 80 mL of ethanol. The resulting mixture was centrifuged at 4200 rpm (2600g, Unicen 21 centrifuge) for one hour, after which the supernatant is removed. To the residue 80 ml ethanol were added and after an additional one minute sonication in a sonicator bath the resulting dispersion is centrifuged at 4200 rpm (2600g, Unicen 21 centrifuge) for one hour and then the supernatant is removed.

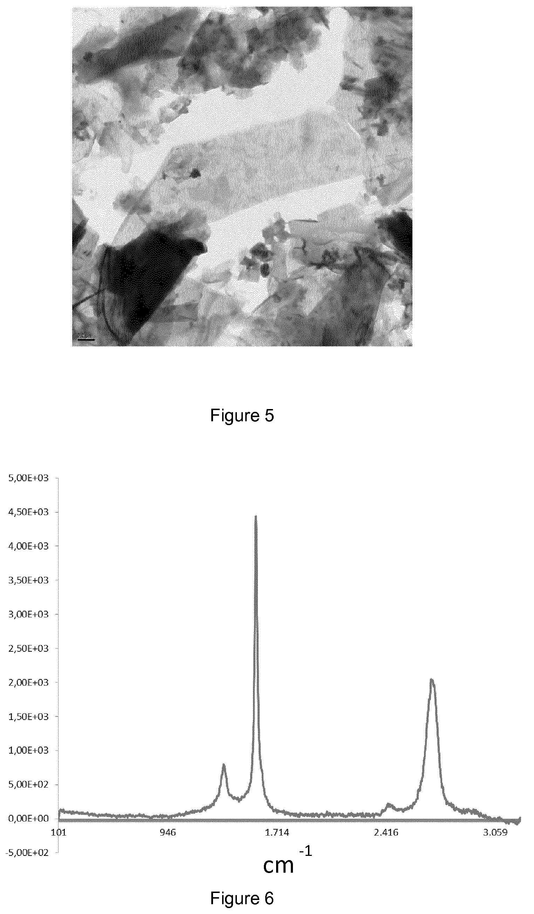

The residue is dried in an oven at 60°C for 12 hours to give 37 mg of a dark gray powder. One milligram of said powder is taken for the analysis of the sample and dispersed in 5 ml of absolute ethanol through 15 minutes sonication. A few drops of said dispersion are taken and added on a copper grid coated with carbon, and they are observed by transmission electron microscopy (TEM). The result can be seen in Figure 5. In Figure 6 a Raman spectrum of the obtained product is shown. The low intensity of the band D, associated with the presence of defects, in 1570 cm⁻¹ is indicative of the good quality of the obtained exfoliated product.

### Example 5

### Exfoliation of graphite flakes.

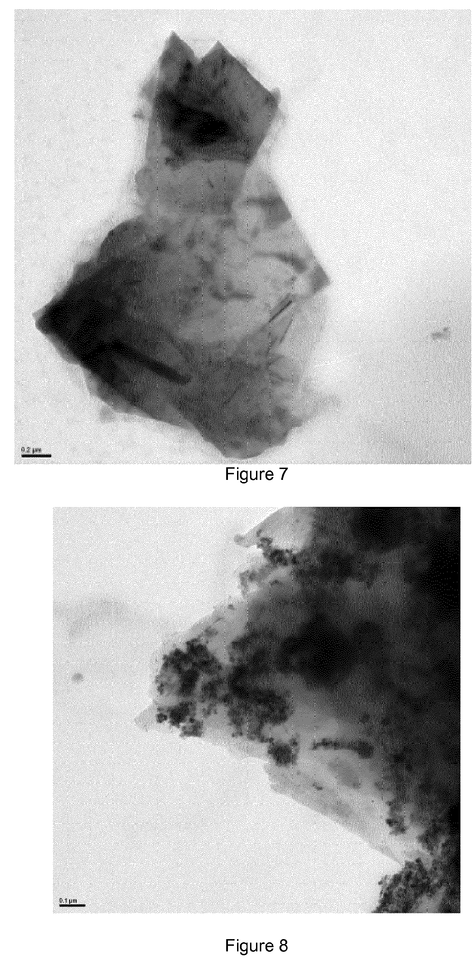

1.0 g of graphite flakes (Sigma-Aldrich, product number 332 461, + 100 mesh) was added to 100 mL of a deep eutectic solvent composed of a mixture of choline chloride and ethylene glycol in 1:2 molar ratio. The mixture was homogenized with a disperser (Ultra-Turrax T25, IKA) for one hour at 8000 rpm to give a homogeneous dark dispersion. The resulting dispersion is centrifuged for one hour at 420g (1700 rpm, Unicen 21 centrifuge) and then, 80 mL of supernatant are taken and 80 mL of absolute ethanol are added. The resulting mixture is vacuum filtered through a nylon membrane (0.45 micron). The residue was washed with additional 100 mL of absolute ethanol and dried in an oven at 60°C for 12 hours to give 27 mg of a dark gray powder. For the analysis of the sample, one milligram of said powder is taken and dispersed in 5 ml of absolute ethanol by 15 minutes sonication. A few drops of said dispersion are taken and added on a copper grid coated with carbon, and observed by transmission electron microscopy (TEM). The image is shown in Figure 7. Additionally, removal of the ethanol in a rotary evaporator under reduced pressure, allows the recovery of the deep eutectic solvent that can be reused.

### Example 6

### Preparation of graphene/NiO composite

1.0 g of graphite flakes (Sigma-Aldrich, product number 332 461, + 100 mesh) was added to 100 mL of a deep eutectic solvent composed of a mixture of choline chloride and ethylene glycol in 1:2 molar ratio. The mixture is homogenized with a disperser (Ultra-Turrax T25, IKA) for one hour at 8000 rpm to give a homogeneous dark dispersion. The resulting dispersion is centrifuged for one hour at 420g (1700 rpm, centrifuge Unicen 21) and, then, 80 mL of supernatant are taken and 15 mg of nickel oxide (Sigma-Aldrich, product number 637130) are added. The resulting mixture is sonicated for about 5 minutes in a bath sonicator and then 2 mL of absolute ethanol are added. The mixture is sonicated for an additional 15 minutes and then it is stirred on a stir plate (IKA, RCT basic) for 3 hours. After this period of time, 80 mL of additional absolute ethanol are added and the resulting mixture was vacuum filtered through a nylon membrane (0.45 micron). The residue was washed with additional 100 mL of absolute ethanol and dried in an oven at 60°C for 12 hours to give 25 mg of a dark gray powder. One milligram of said powder is taken for the analysis of the sample, and dispersed in 5 ml of absolute ethanol by means of 15 minutes sonication. A few drops of said dispersion are taken and added on a copper grid coated with carbon, and observed by transmission electron microscopy (TEM). The image is shown in Figure 8.

### Example 7

### Preparation of graphene/Fe₃O₄ composite

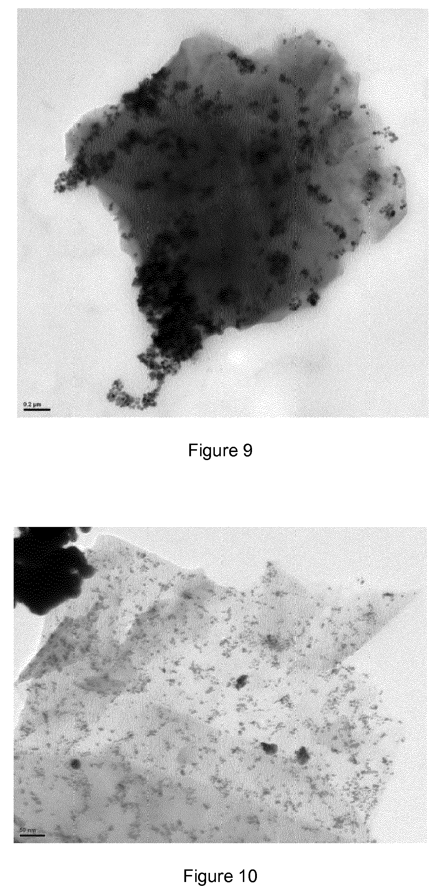

1.0 g of graphite flakes (Sigma-Aldrich, product number 332 461, + 100 mesh) is added to 100 mL of a deep eutectic solvent composed of a mixture of choline chloride and ethylene glycol in a 1:2 molar ratio. The mixture is homogenized with a disperser (Ultra-Turrax T25, IKA) for one hour at 7000 rpm, to give a homogeneous dark dispersion. The resulting dispersion is centrifuged for one hour at 420g (1700 rpm, centrifuge Unicen 21) and then 80 ml of the supernatant were taken and 15 mg of ferrous ferric oxide (Fe₃O₄, Sigma-Aldrich, product number 637106) are added. The resulting mixture is sonicated for about 5 minutes in a bath sonicator and then 2 mL of absolute ethanol are added. The mixture is sonicated for additional 15 minutes and then stirred on a stir plate (IKA, RCT basic) for 3 hours. After this period of time additional 80 mL of absolute ethanol are added and the resulting mixture was vacuum filtered through a nylon membrane (0.45 micron). The residue was washed with additional 100 mL of absolute ethanol and dried in an oven at 60°C for 12 hours to give 22 mg of a dark gray powder. One milligram of said powder is taken for the analysis of the sample and dispersed in 5 ml of absolute ethanol by 15 minutes sonication. A few drops of said dispersion are taken and added on a copper grid coated with carbon and observed by transmission electron microscopy (TEM). The image is shown in Figure 9.

### Example 8

### Preparation of graphene/Au composite

10 mg of exfoliated graphite obtained by the process described in Example 4 and 30 mg of NaAuCl₄ x 2H₂O are added to 30 ml of a deep eutectic solvent composed of a mixture of ethylene glycol and choline chloride in a 1:2 molar ratio. The mixture was sonicated for 15 minutes in a bath sonicator. Then 10 mg of sodium borohydride (NaBH₄) are added and the resulting mixture is stirred for 30 minutes, after which water (1 mL) is added. The mixture is stirred for 6 hours, after which absolute ethanol (30 ml) is added and then vacuum filtered through a nylon membrane (0.45 micron). The residue was washed with additional 100 mL of absolute ethanol and dried in an oven at 60°C for 12 hours. One milligram of said powder is taken for the analysis of the sample and dispersed in 5 ml of absolute ethanol by means of15 minutes sonication. A few drops of said dispersion are taken and added on a copper grid coated with carbon, and observed by transmission electron microscopy (TEM). The image is shown in Figure 10.

### Example 9

### Preparation of graphene/Co₃O₄ composite

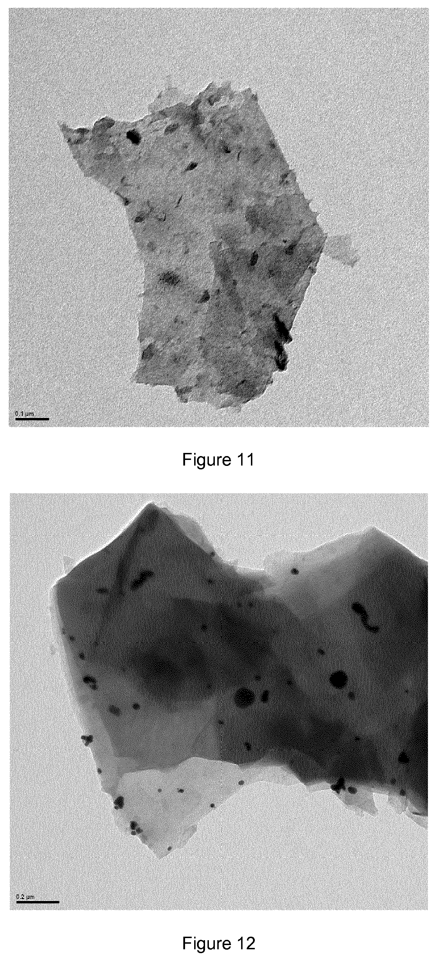

2.0 g of graphite flakes (Sigma-Aldrich, product number 332 461, + 100 mesh) are added to 100 mL of a deep eutectic solvent composed of a mixture of ethylene glycol and choline chloride in a 1:2 molar ratio. The mixture is homogenized with a disperser (Ultra-Turrax T25, IKA) for one hour at 6000 rpm to give a dark homogeneous dispersion. The resulting dispersion is centrifuged for one hour at 420g (1700 rpm, centrifuge Unicen 21). 80 mL of supernatant are taken and 25 mg of Co₃O₄ (Sigma-Aldrich, product number 637025) are added. The resulting mixture is homogenized with a disperser (Ultra-Turrax T25, IKA) for 5 minutes at 4000 rpm after which are added 2 mL of absolute ethanol and the resulting mixture is dispersed for further 30 minutes at 4000 rpm. Subsequently, 80 mL of ethanol are added and the resulting mixture was vacuum filtered through a nylon membrane (0.45 micron). The residue was washed with additional 100 mL of absolute ethanol and dried in an oven at 60°C for 12 hours. One milligram of said powder is taken For the analysis of the sample, and dispersed in 5 ml of absolute ethanol by means of 15 minutes sonication. A few drops of said dispersion are taken and added on a copper grid coated with carbon and observed by transmission electron microscopy (TEM). The image is shown in Figure 11.

### Example 10

### Preparation of graphene/Ag composite

10 mg of exfoliated graphite obtained by the process described in Example 5 and 17 mg of AgNO₃ are added to 30 mL of a deep eutectic solvent composed of a mixture of ethylene glycol and choline chloride in a 1:2 molar ratio. The mixture was sonicated for 15 minutes in a bath sonicator. Then 27 mg of sodium borohydride (NaBH₄) are added and the resulting mixture was stirred for 30 minutes, after which water (0.5 mL) is dropwise added. The mixture is stirred for 6 hours, after which absolute ethanol (30 ml) is added and then vacuum filtered through a nylon membrane (0.45 micron). The residue was washed with additional 100 mL of absolute ethanol and dried in an oven at 60°C for 12 hours to give 17 mg of a dark gray powder. One milligram of said powder is taken for the analysis of the sample, and dispersed in 5 ml of absolute ethanol by means of 15 minutes sonication. A few drops of said dispersion are taken and added on a copper grid coated with carbon and observed by transmission electron microscopy (TEM). The image is shown in Figure 12.

### Example 11

### Preparation graphene/Pt composite

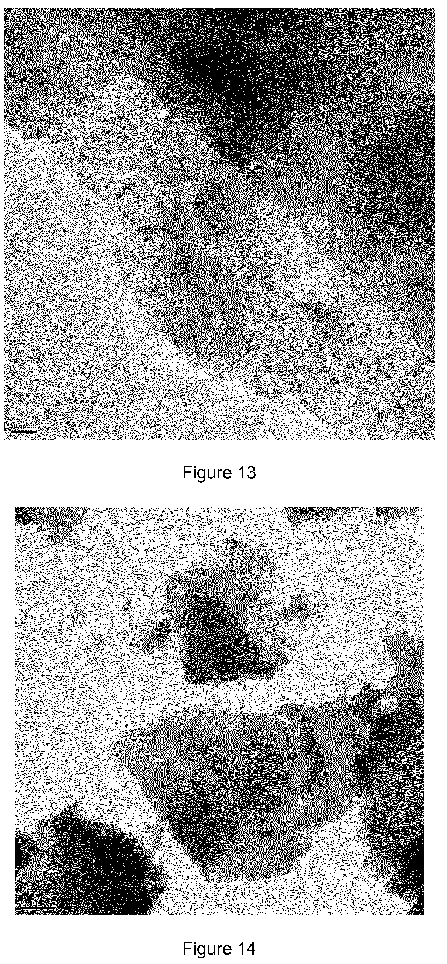

10 mg of exfoliated graphite obtained by the process described in Example 5, and 20 mg of PtCl₂ are added to 30 mL of a deep eutectic solvent composed of a mixture of ethylene glycol and choline chloride in a 1:2 molar ratio. The mixture was sonicated for 15 minutes in a bath sonicator. Then 25 mg of sodium borohydride (NaBH₄) are added and the resulting mixture was stirred for 30 minutes, after which water (0.5 ml) is dropwise is added. The mixture is stirred for 5 hours, after which absolute ethanol (30 ml) is added and then vacuum filtered through a nylon membrane (0.45 micron). The residue was washed with additional 100 mL of absolute ethanol and dried in an oven at 60°C for 12 hours to give 19 mg of a dark gray powder. One milligram of said powder is taken for the analysis of the sample, and dispersed in 5 ml of absolute ethanol by means of 15 minutes sonication. A few drops of said dispersion are taken and added on a copper grid coated with carbon and observed by transmission electron microscopy (TEM). The image is shown in Figure 13.

### Example 12

### Preparation graphene/TiO₂ composite

10 mg of exfoliated graphite obtained according to the procedure described in Example 5, and 15 mg of titanium tetraisopropoxide [Ti(iOPr)₄] are added to 30 mL of a deep eutectic solvent composed of a mixture of choline chloride and ethylene glycol in 1:2 molar proportion. The mixture is sonicated for 15 minutes in a sonicator bath after which water (0.5 mL) is added dropwise. Then the resulting mixture was stirred for 3 hours at 60°C, after which absolute ethanol (30 ml) is added and then vacuum filtered through a nylon membrane (0.45 micron). The residue was washed with additional 100 mL of absolute ethanol and dried in an oven at 60°C for 12 hours to give 17 mg of a gray powder. One milligram of said powder is taken for the analysis of the sample, and dispersed in 5 ml of absolute ethanol by means of 15 minutes sonication. A few drops of said dispersion are taken and added on a copper grid coated with carbon and observed by transmission electron microscopy (TEM). The image is shown in Figure 14.

### Example 13

### Preparation of a polymeric composite of cellulose/exfoliated graphite

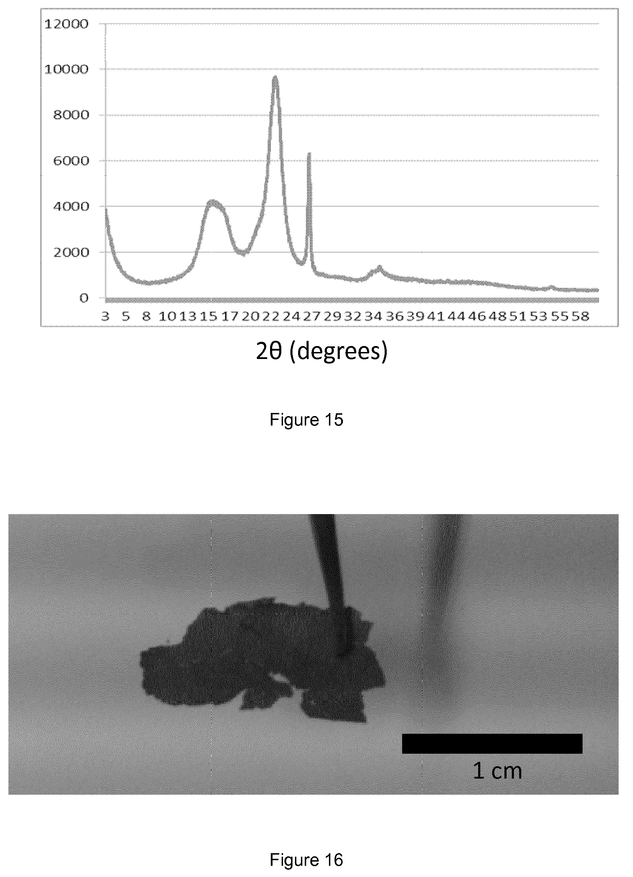

2 mg of exfoliated graphite exfoliated obtained according to the procedure described in Example 2, and 48 mg of cellulose fibers (Sigma-Aldrich) are added to 50 ml of a deep eutectic solvent composed of a mixture of choline chloride and ethylene chloride in a 1:2 molar ratio and the resulting mixture is stirred for about 10 hours at 60°C. Then 50 ml of absolute ethanol are added and the resulting mixture was stirred for an additional 20 minutes and then vacuum filtered through a nylon membrane (pore size: 0.45 micron). The residue is washed with 100 ml of additional absolute ethanol and dried in an oven at 60°C for 12 hours to give 49.7 mg of a light gray laminated material (Figure 16). The powder X-ray diffraction spectrum (XRD) of graphene/cellulose composite is shown in Figure 15.

## Claims

1. A method for obtaining exfoliated graphite, comprising:
a) preparing a first mixture of graphite and a deep eutectic solvent and
b) substantially homogenizing the first mixture to obtain a homogenized mixture containing exfoliated graphite.

2. The method according to claim 1, further comprising:
- mixing said homogenized mixture containing exfoliated graphite with a second mixture, previously prepared, of a polymer and a deep eutectic solvent, yielding a polymer composite comprising exfoliated graphite.

3. The method according to claim 1, further comprising:
- dehomogenizing the homogenized mixture to obtain a dehomogenized mixture.

4. The method according to claim 1, further comprising:
- dehomogenizing the homogenized mixture to obtain a dehomogenized mixture -
- extracting the exfoliated graphite from the dehomogenized mixture obtaining exfoliated graphite isolated.

5. The method according to claim 1, further comprising:
- dehomogenizing the homogenized mixture to obtain a dehomogenized mixture.
- extracting the exfoliated graphite from the dehomogenized mixture obtaining exfoliated graphite isolated,
- mixing exfoliated graphite isolated with a DES obtaining a mixture of exfoliated graphite - DES, and
- combining the mixture exfoliated graphite-DES with a polymer, obtaining a polymeric material that comprises exfoliated graphite.

6. Method according to any one of claims 1 to 5, wherein the deep eutectic solvent comprises an ammonium salt and hydrogen bond donor.

7. Method according to claim 6, wherein the ammonium salt is an ammonium halide.

8. Method according to claim 7, wherein the ammonium salt is (2-hydroxyethyl) trimethylammonium chloride.

9. Method according to any one of claims 6 to 8, wherein the hydrogen bond donor is selected from an alcohol, an amine, an amide, a urea, a thiourea, an imidazole and carboxylic acid.

10. Method according to claim 9, wherein the hydrogen bond donor is ethylene glycol.

11. Method according to any one of claims 1 to 10 wherein the exfoliated graphite comprises graphite sheets of various thicknesses.

12. Method according to any one of claims 1 to 11 wherein said exfoliated graphite is composed at least partially by sheets with a thickness as the graphene thickness, such that at least part of said exfoliated graphite is graphene.

13. Method according to claim 1, wherein the mixture homogenization is performed by power supply.

14. The method according to claim 1, wherein the homogenization is carried out by stirring the first mixture.

15. The method according to claim 1, wherein the homogenization is performed by sonication of the first mixture.

16. Method according to claim 1, **characterized in that** no electric current is applied to the mixture.

17. Method according to claim 1 **characterized in that** no electric potential difference is applied between two graphitic electrodes.

18. Method according to claim 2, wherein the second mixture of polymer and solvent is a substantially homogeneous mixture.

19. Method according to any one of claims 2 or 5, comprising the extraction of polymer composite containing exfoliated graphite.

20. Homogenized mixture obtained by a method as defined in claim 1, that contains exfoliated graphite and a deep eutectic solvent.

21. Exfoliated graphite obtained according to the method defined in any one of claims 1 to 15.

22. Graphene obtained according to the method defined in any one of claims 1 to 15.

23. Mixture of graphite and a deep eutectic solvent, that comprises any proportion of graphite by weight relative to the total weight of the mixture.

24. Mixture of graphite and a deep eutectic solvent according to claim 23, wherein the proportion by weight of graphite relative to the total weight of the mixture is comprised between 0.01% and 20%.

25. Mixture according to claim 23 or 24 wherein the deep eutectic solvent comprises an ammonium salt and hydrogen bond donor.

26. Mixture according to claim 25, wherein the ammonium salt is an ammonium halide.

27. Mixture according to claim 26, wherein the ammonium salt is (2-hydroxyethyl) trimethylammonium chloride.

28. Mixture according to claim 25, wherein the hydrogen bond donor is selected from an alcohol, an amine, an amide, a urea, a thiourea, an imidazole and carboxylic acid.

29. Mixture according to claim 28, wherein the hydrogen bond donor is ethylene glycol.

30. Polymeric composite material comprising exfoliated graphite, **characterized in that** said polymeric material has been prepared by the method defined in any one of claims 2, 5 or 19.

31. Polymeric composite material comprising exfoliated graphite according to claim 30, **characterized in that** the exfoliated graphite is graphene.

32. Polymeric composite material according to claims 30 or 31, wherein the polymer is a conductive polymer.

33. A process for preparing an exfoliated graphite/metal, graphene/metal, exfoliated graphite/graphene oxide or metal/metal oxide composite material comprising:
- a) performing the method defined in claim 1 and
- b) contacting the product resulting from step a) with a compound selected from one or more metals, one or more metal oxides, and one or more metal salts.

34. A process according to claim 33, wherein step b) comprises contacting one or more metals with the product resulting from step a) obtaining a graphene/metal composite or graphite/metal composite.

35. A process according to claim 34, wherein the metal is obtained by reduction of a precursor salt, preferably a salt of gold, silver, platinum, rhodium or palladium and combinations thereof.

36. A process according to claim 34 comprising the addition of H₂O accelerating the formation of the composite materials.

37. A process according to claim 33, wherein step b) comprises contacting one or more metal oxides, one or more metal phosphates or mixtures thereof, with the product resulting from step a), obtaining a graphene/metal oxide or graphite/metal oxide material.

38. A process according to claim 37, further comprising the precipitation of metal oxide by adding a solvent in which the oxide is not soluble.

39. A process according to claim 33, wherein step b) comprises contacting a precursor of one or more metal oxides, preferably one or more metal salts, with the product resulting from step a) obtaining a graphene/metal oxide or graphite/metal oxide material.

40. An exfoliated/metal graphite, graphene/metal, exfoliated graphite/graphene oxide or metal/metal oxide composite obtained by the process described in one of claims 33 to 39.

41. A composite according to claim 40, wherein the metal is selected from gold, silver, platinum, palladium, rhodium, aluminum, tin, cobalt, iron, manganese, nickel, molybdenum, titanium, copper, cerium, ruthenium, zinc, chromium, vanadium, bismuth, silicon, indium, germanium, arsenic and mixtures thereof.

42. A composite material according to claim 40 selected from: a graphene/NiO composite a graphene/FesCU composite, a graphene/Au composite, one graphene/Ag composite, a graphene/Pt composite, a graphene/ Co₃O₄ composite, and graphene/TiO₂ composite.

43. A polymeric composite material obtained by the method defined in claim 1 which is cellulose/exfoliated graphite.

44. Use of exfoliated graphite defined in claim 21, or graphene obtained, defined in claim 22, or polymer composite material defined in claim 30 or 43, or the composite material defined in claim 41 or 42, for manufacturing of electronic devices, energy storage devices, power converters, manufacturing of magnetic materials or manufacturing mechanically strong materials.
